(19) Europäisches Patentamt
European Patent Office
Office européen des brevets

(11) **EP 3 681 022 A1**

(12) **EUROPEAN PATENT APPLICATION**

(43) Date of publication:
**15.07.2020  Bulletin 2020/29**

(51) Int Cl.:
***H02K 16/02*** *(2006.01)*

(21) Application number: **19216661.9**

(22) Date of filing: **16.12.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.01.2019  GB 201900478**

(71) Applicant: **Rolls-Royce plc
London N1 9FX (GB)**

(72) Inventors:
• **Harvey, Giles
  Derby, Derbyshire DE24 8BJ (GB)**
• **Smeeton, Paul
  Derby, Derbyshire DE24 8BJ (GB)**
• **Chong, Ellis
  Derby, Derbyshire DE24 8BJ (GB)**

(74) Representative: **Rolls-Royce plc
Intellectual Property Dept SinA-48
PO Box 31
Derby DE24 8BJ (GB)**

(54) **TURBOMACHINE**

(57)      A vehicle propulsion system (102) comprises a first propulsor (206) and a second propulsor (207). The first and second propulsors (206, 207) are coupled to an electric machine (209) comprising a stator (210) and first and second rotors (211, 212). Each of the first and second rotors (211, 212) are electromagnetically coupled to the stator (210). The first rotor (211) is coupled to the first propulsor (206) and the second rotor (212) is coupled to the second propulsor (207).

*FIG. 2*

EP 3 681 022 A1

## Description

## TECHNICAL FIELD

This disclosure relates to turbomachinery for producing thrust to propel a vehicle.

## BACKGROUND

Turbomachines transfer energy between a rotor and a fluid. They may be used for aircraft propulsion by developing thrust, and may also be used by, for example, water vessels. The range and cost of operating an aircraft or a large water vessel is largely dependent upon the efficiency of its engines. As energy sources become scarcer, it is desirable to increase the propulsive efficiency of the propulsive turbomachinery. It is also desirable to employ electric machines to drive the turbomachines to reduce the thermal losses and emissions associated with internal combustion engines.

## SUMMARY

According to a first aspect there is provided:
a vehicle propulsion system comprising a first propulsor and a second propulsor, the first and second propulsors being coupled to an electric machine comprising a stator and first and second rotors, each of the first and second rotors being electromagnetically coupled to the stator, the first rotor being coupled to the first propulsor and the second rotor being coupled to the second propulsor.

Advantageously, a single electric machine having dual rotors and a single stator can be used to drive two separate propulsors independently of one another. Consequently, a single stator can be used, thereby saving weight compared to separate electric machines, while maintaining the benefit of a vehicle propulsion system having multiple propulsors.

The vehicle may comprise an aircraft or may comprise a marine vessel. The propulsors may comprise propellers or ducted fans.

The electric machine may be coupled to a power electronics unit configured to provide electrical current having an AC waveform to stator windings of the stator.

The power electronics unit may be configured to provide an AC current having a first waveform comprising a first frequency superimposed on a second waveform having a second frequency. Advantageously, an electric current having separate waveforms can be provided to the machine stator windings to provide for different rotor speeds from the first and second rotors, using a single stator and a single power electronics unit, but with dual rotors.

The electric machine stator may comprise first and second stator windings coupled to the power electronics unit in series. Advantageously, separate windings can be provided to provide magnetic circuits between the separate rotors, while providing only a single power electronics unit. Advantageously, relatively little magnetic coupling will occur between the first and second sets of excitation frequencies, resulting in high efficiency, and predictable behaviour.

Alternatively, the electric machine stator may comprise a common stator winding configured to form a magnetic circuit with both the first and second rotors.

The first and second stator windings may be wound in opposite directions, such that the stator provides first and second magnetic circuits that rotate in opposite directions and link with respective magnetic circuits of the first and second rotors. Advantageously, counter-rotating propulsors can be provided using a single source of single frequency electrical power.

The common stator winding may be wound toroidally around a stator core. Advantageously, only a single set of stator end windings is required, thereby minimising weight and stator size, while also minimising resistive losses.

The first and second rotors may comprise different magnetic pole numbers. Consequently, the first and second rotors can interact with the first and second waveforms of the stator windings respectively, and thereby can rotate at different speeds and / or directions.

A pole number ratio may be defined by the number of magnetic poles of the first rotor divided by the number of poles of the second rotor. The pole number ratio may be up to 1:1.4. In one embodiment, the first rotor may comprise 10 magnetic poles, and the second rotor may comprise 14 magnetic poles.

The first propulsor may be located forward of the second propulsor. Advantageously, the propulsion system can provide for more efficient thrust than a single propulsor.

The second propulsor may comprise a smaller diameter than the first propulsor.

The electric machine may be configured such that the second propulsor rotates at a higher rotational speed in use than the first propulsor. Advantageously, the first and second propulsors may have a similar tip speed, but with the second propulsor having a higher rotational speed. Consequently, the second propulsor may perform more work at the inner radius of the propulsor compared to a single, slower revolving propulsor, thereby increasing the total amount of work done by the propulsion system for an overall propulsor radius.

The propulsion system may comprise a duct provided at an outer radius of the second fan. Advantageously, the second fan is enclosed by the duct, which ensures the tip vortices from the second fan do not interact with the fan flow from the first fan. Consequently, efficiency is increased, while noise is reducing.

The electric machine may comprise one or both of a radial flux electric machine and an axial flux electric machine.

In one embodiment, the electric machine comprises a radial flux machine. The first rotor may be provided radially outward of the stator, and the second rotor may be provided radially inward of the stator. Advantageously, a compact machine can be provided, which is suitable for driving coaxial, co-planar first and second fans.

In a second embodiment, the electric machine comprises an axial flux machine. The first rotor may be provided axially forward of the stator, and the second rotor may be provided axially rearward of the stator.

**BRIEF DESCRIPTION OF THE DRAWINGS**

Embodiments will now be described by way of example only with reference to the accompanying drawings, which are purely schematic and not to scale, and in which:

Figure 1 is a plan view of an aircraft having first axial flow turbomachines for producing thrust;

Figure 2 is a cross sectional side view of one of the turbomachines of Figure 1;

Figure 3 is a cross sectional side view of an electric machine of the turbomachine of figure 2;

Figures 4a and 4b are graphs of waveform components and output waveforms of a motor controller for the electric machine of figure 3;

Figure 5 is an axial cross sectional view of the electric machine of figure 3;

Figure 6 is a cross sectional side view of a second turbomachine for the aircraft of figure 1;

Figure 7 is a cross sectional side view of a third turbomachine for the aircraft of figure 1;

Figure 8 is a cross sectional side view of a fourth alternative turbomachine for the aircraft of figure 1; and

Figure 9 is a cross sectional side view of a fifth alternative turbomachine for the aircraft of figure 1.

**DETAILED DESCRIPTION**

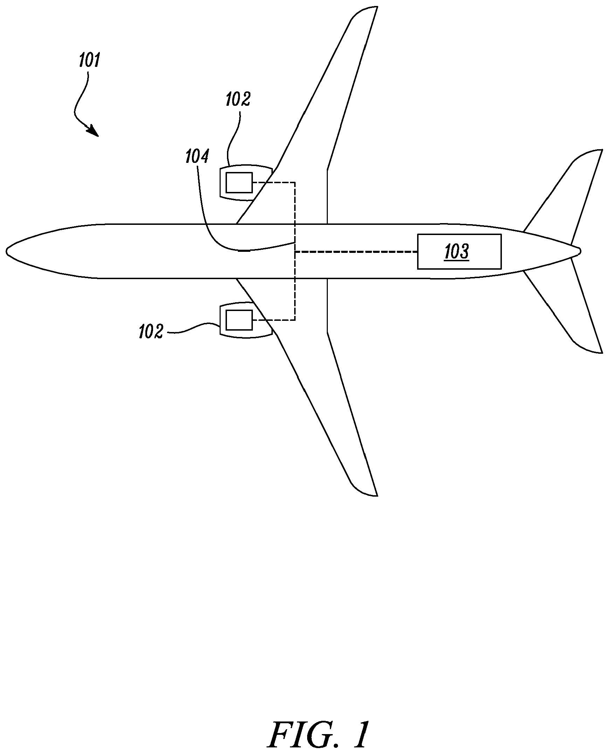

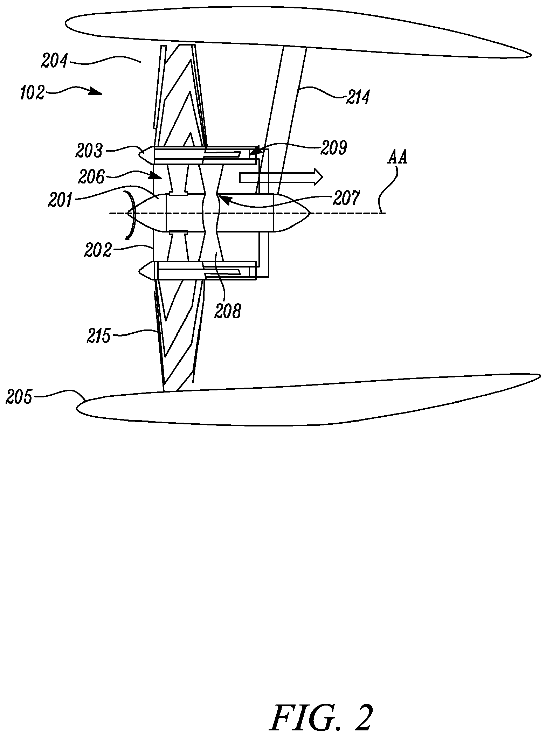

An aircraft 101 is illustrated in Figure 1, and is in the present embodiment a hybrid electric aircraft having a propulsion system comprising two axial flow turbomachines 102 that are electrically-driven. The turbomachines 102 will be described further with reference to Figure 2.

Referring again to Figure 1, electrical power is provided to the turbomachines by an electrical generation unit 103 located in the fuselage via a bus 104. It will be appreciated by those skilled in the art that the bus 104 may include conductors, power electronics, and may possibly include energy storage systems such as batteries or flywheels to provide extra capacity.

In the present embodiment, the electrical generation unit 103 includes an electric machine 209 which is driven by an internal combustion engine. In the present example, the electrical generation unit 103 is configured as a turboelectric generator, in which the internal combustion engine is a gas turbine engine 103, i.e. a Brayton cycle engine. Alternatively, the internal combustion engine could be a piston engine, such as a Diesel cycle engine, or any other type of internal combustion engine, such as those operating in accordance with an Otto or Atkinson cycle.

In an alternative configuration, the aircraft 101 does not include an electrical generation unit 103, but instead includes a battery pack and is hence fully electric.

A schematic of one of the turbomachines 102 is illustrated in Figure 2.

The turbomachine 102 is substantially axisymmetric around its centreline A-A. An inner casing 201 defines the inner radial extent of an inner duct 202, with a flow splitter 203 defining the outer radial extent of the inner duct 202. The flow splitter 203 also defines the inner radial extent of an outer duct 204, with an outer casing 205 defining the outer radial extent of the outer duct 204.

The inner duct 202 and outer duct 204 are thereby annular and concentric with each other with respect to the centreline A-A.

A first fan 206 is provided, which extends from the inner casing 201, through the inner duct 202 to the flow splitter 203, and also extends from the flow splitter 203 through the outer duct 204 to the outer casing 205. The first fan 206 comprises a plurality of blades 215, which may differ in the inner and outer ducts 202, 204.

A second fan 207 is also provided. The second fan 207 is provided downstream of the first fan 206 when the propulsion system is operated to provide forward thrust. The second fan 207 comprises blades 208 which extend from the inner casing 201, through the inner duct 202 to the flow splitter 203. The second fan 207 has a smaller diameter than the first fan 206, and only extends through the first duct 202, and does not extend into the second duct 204.

The first and second fans 206, 207 are supported by a support strut 214, which extends between the outer casing 205 and the inner casing 201.

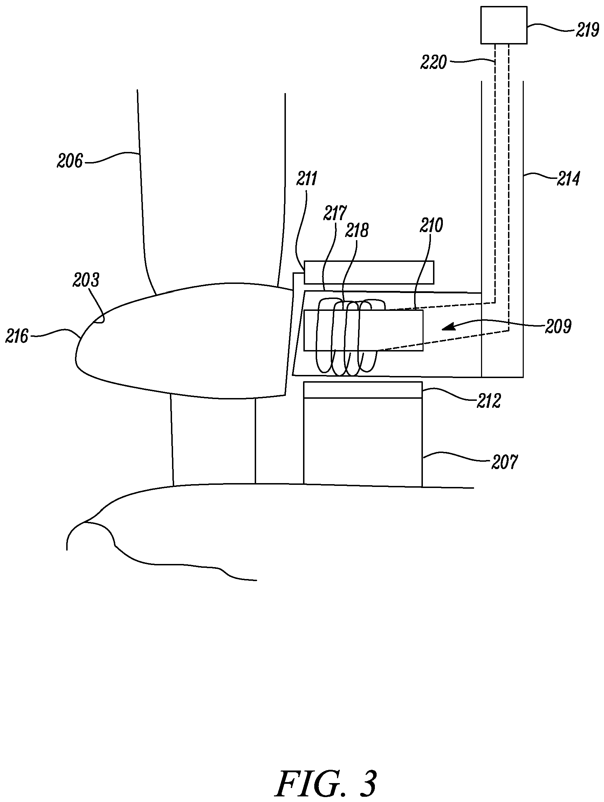

Both the first and second fans 206, 207 are driven by a common electric machine 209, which is shown in more detail in figure 3.

The electric machine 209 comprises a single stator 210 and first and second rotors 211, 212 which are mounted for rotation relative to the stator 210. The flow splitter 203 houses the stator 210, which is held static by the strut 214 in operation. A front part 216 of the splitter 203 rotates with the first fan 206, while a rear part 217 of the splitter 203 mounts the stator 210. The stator 210 comprises stator windings 218, which are electrically coupled to power electronics in the form of a motor controller 219 via cables 220. The motor controller 219 provides AC current to the windings 218 via the cables 220.

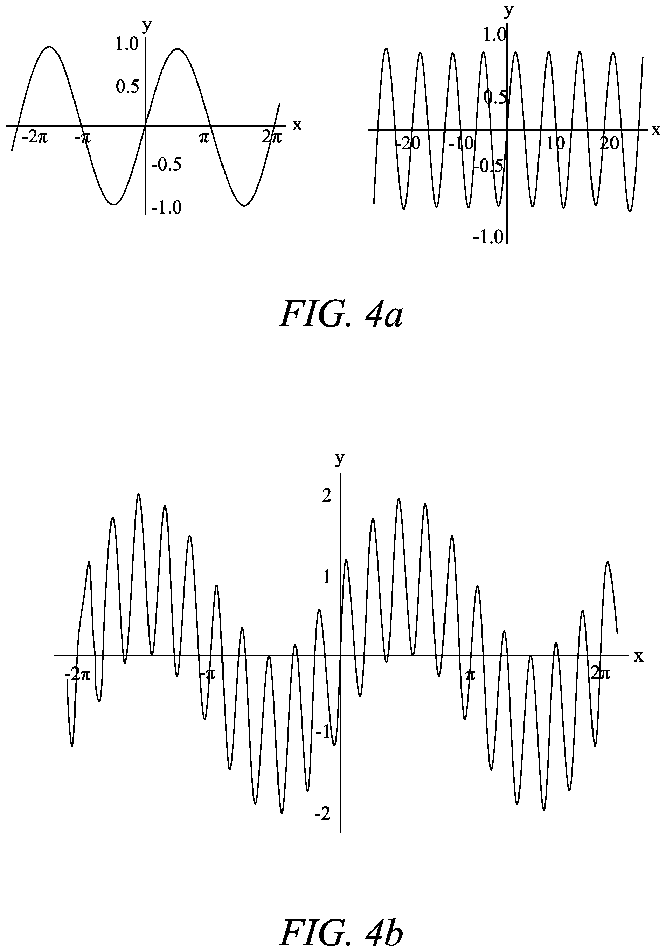

The motor controller 219 is preferably of a "dual frequency" type, which is capable of providing sinusoidal AC current having two different frequencies superimposed on a single AC waveform. Figures 4a and 4b show an example waveform output of the motor controller 219. As can be seen from figure 4a, two waveforms are output, having different frequencies. As will be understood, the waveforms could also have different magnitudes. When superimposed, these two waveforms result in a third superimposed waveform, as shown in figure 4b, which is output by the motor controller 219. The motor controller 219 is typically a conventional motor controller, and is essentially an inverter, which uses pulse width modulation to turn a DC current (from either a battery or another DC power source) into the superimposed AC waveform, or comprises a rectifier coupled with an inverter to transform an AC waveform having a first frequency, into the AC waveform of figure 4b.

Referring again to figure 3, the first and second rotors 211, 212 differ from one another. The first rotor 211 is mounted radially outward of the stator 210 and is coupled to the first fan 206, whereas the second rotor 212 is mounted radially inward of the stator 210 and is coupled to the second fan 207.

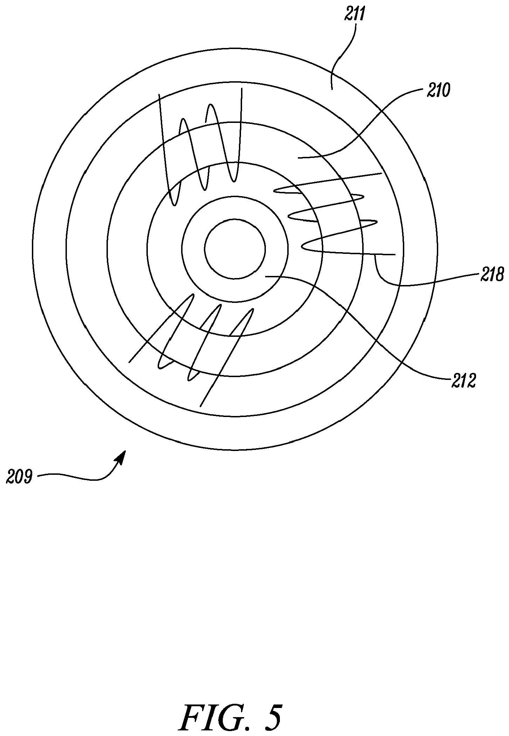

Referring to figure 5, the stator 210 comprises stator windings 218. The windings are arranged for three phase operation, with three winding phases 218, each coupled to a respective output of the motor controller. Each phase of the windings 218 is fed with the same waveform, but out of phase with the other windings, for example, in a three-phase configuration. The first and second rotors 211, 212 of the motor 209 each comprise a plurality of permanent magnets (not shown). In each rotor 211, 212 the permanent magnets are arranged with alternating poles in a circumferential pattern. As can be seen however, the first and second rotors 211 212 having different numbers of poles, with the first rotor 211 having more poles (fourteen in this example) than the second rotor 212 (which has ten in this example).

In view of the different number of poles, the first and second rotors 211, 212 "link" to different frequency components of the superimposed waveform. The stator windings and rotor poles of the first rotor 211 are spatially arranged such that the magnetic flux generated by the first frequency component of the electrical current aligns with the magnetic flux generated by the first rotor 211 permanent magnets. Similarly, the stator windings and rotor poles of the second rotor 212 are spatially arranged such that the magnetic flux generated by the second frequency component of the electrical current aligns with the magnetic flux generated by the second rotor 212 permanent magnets. The stator magnetic field is rotated, and the respective rotors 211, 212 are caused to rotate with their respective stator magnetic fields. By varying the frequency of the two frequency components, the speeds of the rotors 211, 212 can be controlled independently of one another.

Consequently, in view of the different frequencies of the first and second motor controller output AC current frequency components, the two rotors 211, 212 rotate at different speeds (in terms of revolutions per minute). This in turn means that the fans 206, 207 rotate at different speeds. Since the first fan 206 has a larger diameter, the relatively slow rotational speed of the first fan 206 ensures that the tip speeds are relatively low (thereby ensuring low noise and highly efficient operation) and so the majority of the pressure rise across the first fan 206 occurs near the tips. On the other hand, the circumferential velocity of the first fan 206 within the inner duct 202 is relatively low, and so relatively little pressure rise occurs across the first fan 206 in the inner duct.

However, the second fan 207 rotates at a higher RPM. In view of its smaller diameter, the tip speeds of the second fan 207 are again maintained at a manageable amount. The circumferential speeds of the second fan 207 at a given diameter are though higher, and so the second fan 207 is able to provide for a higher pressure rise within the inner duct 202, thereby providing a significant increase in overall fan system work.

Consequently, the overall fan system provides for a high pressure rise (and so more work, and therefore more thrust) compared to a single fan propulsion system of the same diameter. On the other hand, the axial velocity of the fan flow may be relatively low, giving high thrust efficiency compared to dual row fan systems having two fans of the same diameter. Meanwhile, the only additional weight is from the relatively small second fan 207, and the additional rotor 212, and so the weight increase relative to a conventional fan is small. This may result in a system which is more power dense overall (i.e. provides a greater thrust to weight ratio than conventional fans), since the air flow is increased, without increasing the size of the casing 205.

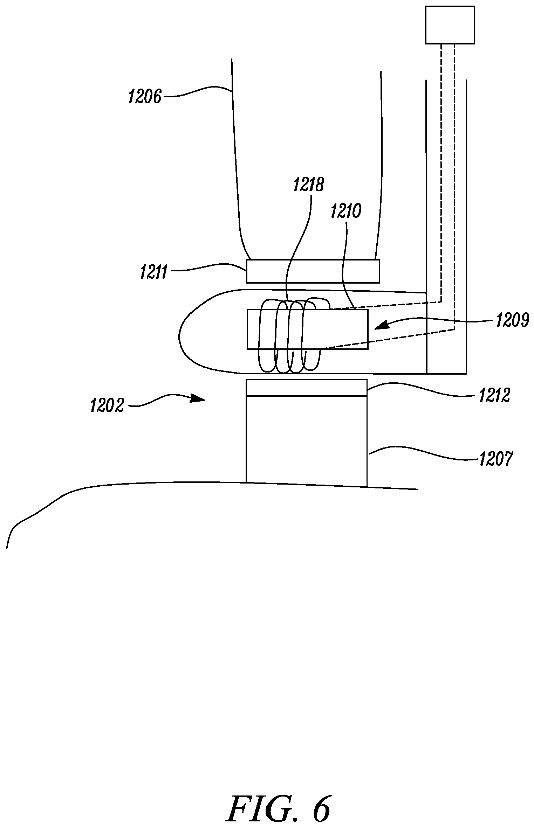

Figure 6 shows part of an alternative propulsion system comprising a turbomachine 1202. The turbomachine comprises first and second fans 1206, 1207. The fans 1206, 1207 are concentric, co-axial and co-planar, with the first fan 1206 being provided at a radially outer end of the second fan 1207.

Again, the turbomachine 1202 is powered by an electric machine 1209 similar to that of the first embodiment having a single stator 1210 with stator windings 1218 and first and second rotors 1211, 1212 which are each coupled to a respective fan 1206, 1207. The fans 1206, 1207 are again provided within a nacelle (not shown). Again, the rotors 1211, 1212 have different pole numbers, and the stator windings 1218 are fed with current having two frequency components.

Again, in operation, the second rotor 1212 and fan 1207 rotates more quickly than the first rotor 1211 and fan 1206. Consequently, the tip speeds of both fans 1206, 1207 can be maintained at acceptable speeds.

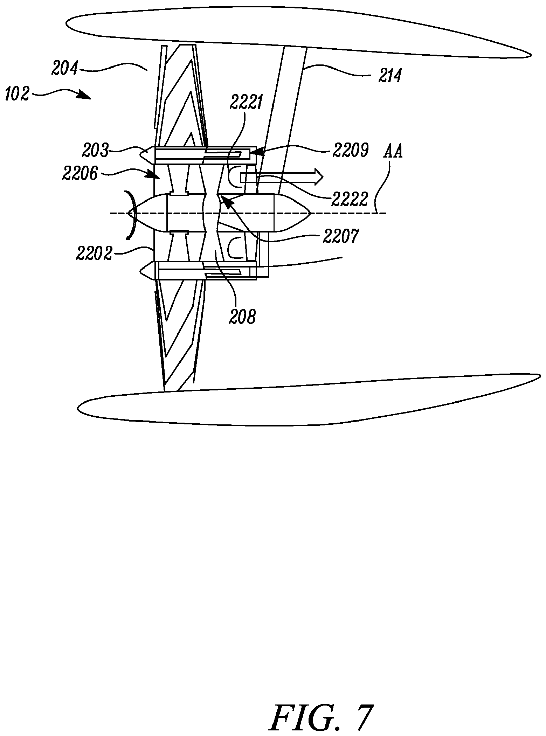

Figure 7 shows a further alternative propulsion system comprising a turbomachine 2102. The turbomachine 2202 has first and second fans 2206, 2207 which are similar to the first and second fan 206, 207 of the first embodiment. Similarly, the first and second fans 2206, 2207 are driven by a motor 2209, which is similar to the motor 209 of the first embodiment. However, the second fan 2207 acts as part of a compressor, which compresses air entering into a gas turbine engine core comprising, in flow series, the second fan / compressor 2207, a combustor 2221 and a turbine 2222. The turbine 2222 is coupled to the compressor 2207 by a shaft. Heated gasses produced by the combustor 2221 turn the turbine, such that the compressor 2207 is driven by both the electric motor 2209 and the turbine 2222. One or more further turbines (not shown) may be provided, which may be coupled to the first fan 2206 by a separate shaft, such that the first fan 2206 may also optionally be driven by both the electric motor 2209 and the further turbine. In general, it is desirable for the core compressor to run at a higher speed than the fan, in view of its smaller diameter, and also its different role in producing pressure, rather than thrust.

Consequently, the compressor 2207 and the first fan 2206 can be "boosted" by the electric motor 2209 at different speeds. Consequently, the power of the gas turbine engine can be increased when necessary, by increasing both core mass flow, and fan flow. This can be achieved by a relatively compact, lightweight motor, having only a single stator and power electronics to provide motive force for independent rotation of the core compressor 2207 and fan 2206.

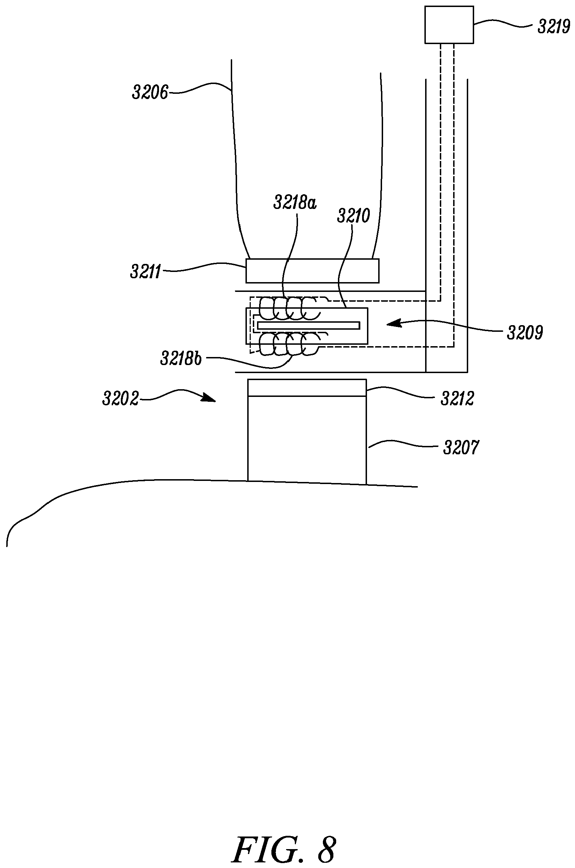

Figure 8 shows a still further alternative propulsion system comprising a turbomachine 3202 which is broadly similar to the turbomachine 1202 of figure 6, having first and second fans 3206, 3207, powered by an electric motor 3209 having first and second rotors 3211, 3212 coupled to the respective fans 3206, 3207. Again, a single stator 3210 is provided. However, the stator windings of this embodiment differ to those of other embodiments.

The stator 3210 comprises first and second windings sets 3218a, 3218b. The first winding set 3218a is wound around a radially outer side of the stator 3210, and magnetically couples to the magnets of the first rotor 3211. Similarly, the second winding set 3218b is wound around a radially inner side of the stator 3210, and magnetically couples to the magnets of the second rotor 3212. Each of the windings sets 3218a, 3218b is coupled to a common motor controller 3219, and is wired in series with the other winding set 3218a, 3218b. Consequently, the motor controller 3219 is common to both winding sets. In view of the presence of a single motor controller, and windings arranged in series, the stator 3210 is regarded as a single stator, common to both rotors.

The motor 3209 behaves in a similar manner to the motors of the previous embodiments. When fed with AC current having superimposed waveforms from the motor controller 3219, the first and second rotors 3211, 3212 rotate at different speeds, as determined by the AC frequency components and the rotor pole numbers of the machines. However, in view of the physical separation between the first and second stator windings 3218a, 3218b, a number of advantages are provided. These include more design freedom from an electromagnetic perspective, more straightforward torque control due to the lower magnetic coupling between the two sets of excitation frequencies and potentially better speed control due to the lower electromagnetic interference. On the other hand, such an arrangement would increase the mass of the end windings, thereby resulting a higher weight, larger volume electric machine compared to the previous embodiments.

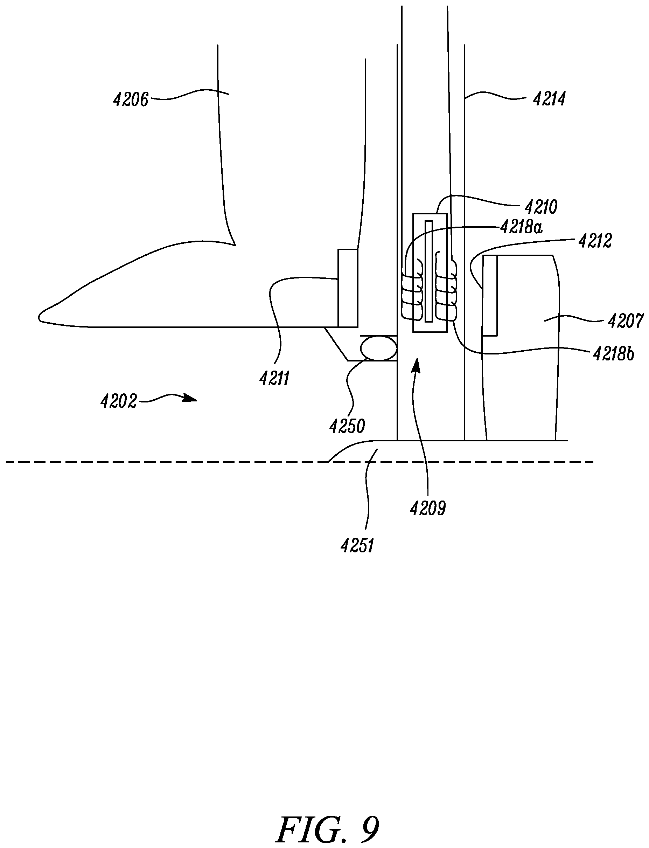

Figure 9 shows a still further alternative propulsion system comprising a turbomachine 4202 which is broadly similar to the turbomachine 1202 of figure 6, having first and second fans 4206, 4207, powered by an electric motor 4209 having first and second rotors 4211, 4212 coupled to the respective fans 4206, 4207. Again, a single stator 4210 is provided. However, the stator windings and rotors of this embodiment differ to those of other embodiments.

The stator 4210 is mounted within a strut 4214 and comprises first and second windings sets 4218a, 4218b. The first winding set 4218a is wound around an axially forward side of the stator 4210, and magnetically couples to the magnets of the first rotor 4211. Similarly, the second winding set 4218b is wound around an axially forward side of the stator 4210, and magnetically couples to the magnets of the second rotor 4212. Consequently, the magnetic flux provided by the stator windings 4218a, 4218b extends axially toward the permanent magnets of the respective rotors 4211, 4212, and so the electric machine 4209 is in the form of an axial electric machine, which can be contrasted to the radial electric machine of figure 8. Each of the windings sets 4218a, 4218b is coupled to a common motor controller 4219, and is wired in series with the other winding set 4218a, 4218b. Consequently, the motor controller 4219 is common to both winding sets. In view of the presence of a single motor controller, and windings arranged in series, the stator 3210 is regarded as a single stator, common to both rotors.

The motor 4209 behaves in a similar manner to the motors of the previous embodiments. When fed with AC current having superimposed waveforms from the motor controller 4219, the first and second rotors 4211, 4212 rotate at different speeds, as determined by the AC frequency components and the rotor pole numbers of the machines.

The arrangement of the fans 4206, 4207 also differs from that of figure 8. The first fan 4206 is mounted to the strut 4214 by a bearing arrangement 4250, while the second fan 4207 is mounted to a central shaft 4251, which is in turn mounted for rotation by a separate bearing arrangement (not shown). The first fan 4206 is provided upstream in normal fan flow direction to the second fan 4207.

It will be appreciated by those skilled in the art that whilst the present embodiments of the turbomachine 102 have been described with application to permanent magnet electric machines, the invention is also applicable in principle to other types of machines, such as switched reluctance, doubly fed synchronous machines etc. For example, the permanent magnets of the first and second rotors could be replaced by DC electromagnets.

It will also be understood that the first and second propulsors could be provided in a different configuration. For instance, a second, smaller diameter propulsor could be provided upstream of a first, larger diameter propulsor.

It will also be understood that additional power electronics units could be provided to provide for redundancy in the event of a failure of a single power electronics unit. However, each power electronics unit would be configured to produce superimposed first and second output AC frequencies, and would be coupled to both the same sets of stator windings which magnetically interact with first and second sets of rotor magnets.

Similarly, it would be possible to operate the two rotor, single stator electrical machine using electric current having only a single frequency, with the two rotors operating at different speeds, having a fixed speed relationship.

The magnetic relationship that governs the principle of operation is given by $p_1 + p_2 = 2n$, where $n$ is the number of stator teeth, $p_1$ is the number of magnetic poles in first rotor, and $p_2$ is the number of magnetic poles in second rotor.

The relationship between mechanical speed $(w)$, electrical frequency $(f)$ and magnetic poles $(p)$ is then given by $f = pw / 120$.

Therefore,

$$f_1 = p_1 * w_1 / 120 \text{ for the first rotor,}$$

and

$$f_2 = p_2 * w_2 / 120 \text{ for the second rotor}$$

For the case of a single frequency, $f_1 = f_2$, the above two equations can be combined to give, $p_1 * w_1 = p_2 * w_2$. Therefore, the fixed speed relationship, or magnetic gearing, is then given by, $w_1 / w_2 = p_2 / p_1$.

In the example of a first rotor having 14 poles and a second rotor having 10 poles, as mentioned in page 9, then the gear ratio is 7:5. i.e. speed is inversely proportional to the number of magnetic poles. Only one frequency will be required, and the controller may be "locked" onto the rotor with the lower pole number (i.e. the faster rotor) so as to minimise electrical AC losses.

Similarly, it would be possible to operate the two rotor, single stator electric machine using electric current having only a single frequency, with the two rotors operating at the same or different speeds, but in opposite directions. This can be achieved by winding the windings that couple with each rotor in opposite directions. For instance, when view from the same side, one winding could be wound clockwise, while the other is wound counter-clockwise.

Although the disclosure has been described in relation to a ducted fan arrangement for an aircraft, it will be understood that other propulsors could be utilised, for example, open rotor propellers. Similarly, the system could be utilised for different vehicle types, for instance, marine vessels such as ships and submarines.

Various examples have been described, each of which feature various combinations of features. It will be appreciated by those skilled in the art that, except where clearly mutually exclusive, any of the features may be employed separately or in combination with any other features and the invention extends to and includes all combinations and subcombinations of one or more features described herein.

**Claims**

1. A vehicle propulsion system (102) comprising a first propulsor (206) and a second propulsor (207), the first and second propulsors (206, 207) being coupled to an electric machine (209) comprising a stator (210) and first and second rotors (211, 212), each of the first and second rotors (211, 212) being electromagnetically coupled to the stator (210), the first rotor (211) being coupled to the first propulsor (206) and the second rotor (212) being coupled to the second propulsor (207).

2. A propulsion system according to claim 1, wherein the vehicle comprises an aircraft (101).

3. A propulsion system according to claim 1 or claim 2, wherein the propulsors comprise either propellers or ducted fans (206, 207).

4. A propulsion system according to any of the preceding claims, wherein the electric machine (209) is coupled to a power electronics unit (219) configured to provide electrical current having an AC waveform to stator windings (218) of the stator (210).

5. A propulsion system according to claim 4, wherein the power electronics unit (219) is configured to provide an AC current having a first waveform comprising a first frequency superimposed on a second waveform having a second frequency.

6. A propulsion system according to claim 4 or claim 5, wherein the electric machine stator (3210) comprise first and second stator windings (3218a, 3218b) coupled to the power electronics unit (3219) in series.

7. A propulsion system according to claim 6, wherein first and second stator windings are wound in opposite directions, such that the stator provides first and second magnetic circuits that rotate in opposite directions and link with respective magnetic circuits of the first and second rotors.

8. A propulsion system according to claim 4 or claim 5, wherein the electric machine stator (210) comprises a common stator winding (218) configured to form a magnetic circuit with both the first and second rotors (211, 212).

9. A propulsion system according to claim 8, wherein the common stator winding (218) is wound toroidally around a stator core (210).

10. A propulsion system according to any of the preceding claims, wherein the first and second rotors (211, 212) comprise different magnetic pole numbers.

11. A propulsion system according to any of the preceding claims, wherein the first propulsor (206) is located forward of the second propulsor (207).

12. A propulsion system according to any of the preceding claims, wherein the second propulsor (207) comprises a smaller diameter than the first propulsor (206).

13. A propulsion system according to any of the preceding claims, wherein the electric machine (209) is configured such that the second propulsor (207) rotates at a higher rotational speed in use than the first propulsor (206).

14. A propulsion system according to any of the preceding claims, wherein the electric machine comprises a radial flux machine (209), and wherein the first rotor (211) is provided radially outward of the stator (210), and the second rotor (212) is provided radially inward of the stator (209).

15. A propulsion system according to any of claims 1 to 13, wherein the electric machine comprises an axial flux machine (4209), and wherein the first rotor (4211) is provided axially forward of the stator (4210), and the second rotor (4212) is provided axially rearward of the stator (4210).

*FIG. 1*

*FIG. 2*

*FIG. 3*

FIG. 4a

FIG. 4b

FIG. 5

FIG. 6

FIG. 7

FIG. 8

FIG. 9

Europäisches
Patentamt

European
Patent Office

Office européen
des brevets

# EUROPEAN SEARCH REPORT

Application Number

EP 19 21 6661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 2 613 033 A2 (HAMILTON SUNDSTRAND CORP [US]) 10 July 2013 (2013-07-10)<br>* abstract; claim 8; figures 1,2 *<br>* paragraphs [0001], [0005], [0031], [0043] *<br>----- | 1-4, 10-14<br>5-9,15 | INV.<br>H02K16/02 |
| X | WO 2018/054483 A1 (SIEMENS AG [DE]) 29 March 2018 (2018-03-29)<br>* abstract; figure 1 *<br>* page 2, lines 6-7 *<br>* page 2, lines 30-33 *<br>* page 3, lines 6-14 *<br>* page 4, lines 4-5 *<br>----- | 1-3,10, 12,14 | |
| Y | GB 2 558 660 A (MAGNOMATICS LTD [GB]) 18 July 2018 (2018-07-18)<br>* page 21, lines 11-29 *<br>----- | 5-9 | |
| A | EP 1 351 374 A2 (NISSAN MOTOR [JP]) 8 October 2003 (2003-10-08)<br>* paragraph [0019] *<br>----- | 4-9 | |
| Y | GB 2 534 196 A (YASA MOTORS LTD [GB]) 20 July 2016 (2016-07-20)<br>* abstract *<br>----- | 15 | TECHNICAL FIELDS SEARCHED (IPC)<br><br>H02K |

The present search report has been drawn up for all claims

| Place of search | Date of completion of the search | Examiner |
|---|---|---|
| The Hague | 15 May 2020 | Güvener, Cem |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                           

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 6661

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2020

| Patent document cited in search report | | Publication date | Patent family member(s) | | Publication date |
|---|---|---|---|---|---|
| EP 2613033 | A2 | 10-07-2013 | EP | 2613033 A2 | 10-07-2013 |
| | | | US | 8464511 B1 | 18-06-2013 |
| WO 2018054483 | A1 | 29-03-2018 | CN | 109790799 A | 21-05-2019 |
| | | | EP | 3500747 A1 | 26-06-2019 |
| | | | US | 2020017230 A1 | 16-01-2020 |
| | | | WO | 2018054483 A1 | 29-03-2018 |
| GB 2558660 | A | 18-07-2018 | CN | 110366810 A | 22-10-2019 |
| | | | EP | 3568902 A1 | 20-11-2019 |
| | | | GB | 2558660 A | 18-07-2018 |
| | | | JP | 2020506651 A | 27-02-2020 |
| | | | US | 2019341828 A1 | 07-11-2019 |
| | | | WO | 2018130859 A1 | 19-07-2018 |
| EP 1351374 | A2 | 08-10-2003 | EP | 1351374 A2 | 08-10-2003 |
| | | | JP | 3757890 B2 | 22-03-2006 |
| | | | JP | 2003299393 A | 17-10-2003 |
| | | | US | 2003184245 A1 | 02-10-2003 |
| GB 2534196 | A | 20-07-2016 | CN | 107408875 A | 28-11-2017 |
| | | | EP | 3245719 A1 | 22-11-2017 |
| | | | GB | 2534196 A | 20-07-2016 |
| | | | JP | 2018506254 A | 01-03-2018 |
| | | | RU | 2017128923 A | 18-02-2019 |
| | | | US | 2018013323 A1 | 11-01-2018 |
| | | | WO | 2016113567 A1 | 21-07-2016 |

EPO FORM P0459

For more details about this annex : see Official Journal of the European Patent Office, No. 12/82